# EUROPEAN PATENT SPECIFICATION

(11) **EP 0 434 136 B1**
(45) Date of publication and mention of the grant of the patent: **13.03.1996**
(21) Application number: 90203299.4
(22) Date of filing: 13.12.1990
(51) Int. Cl.: G11B 17/022

(54) **Disc-record player and centring device for use in the player**
Plattenspieler sowie Zentriervorrichtung zum Gebrauch in dem Plattenspieler
Tourne-disque et dispositif de centrage destiné à être utilisé dans le tourne-disque

(30) Priority: 20.12.1989 NL 8903113
(43) Date of publication of application: 26.06.1991
(73) Proprietor: Philips Electronics N.V., NL-5621 BA Eindhoven (NL)
(72) Inventor: Decoster, Michel Henri François, NL-5656 AA Eindhoven (NL); Camps, Libert Henricus Augustinus Maria, NL-5656 AA Eindhoven (NL); Rouws, Petrus Levanius Antonius, NL-5656 AA Eindhoven (NL); van Heusden, Omar Prosper Leo Pieter, NL-5656 AA Eindhoven (NL)
(74) Representative: Schrijnemaekers, Hubert Joannes Maria

(56) References cited:
- EP-A- 0 200 705
- EP-A- 0 286 770
- EP-A- 0 296 829
- EP-A- 0 331 663
- US-A- 4 523 306
- PATENT ABSTRACTS OF JAPAN vol. 9, no. 68 (P-344)(1791) 28 March 1985, & JP-A- 59 201267 (TOSHIBA) 14 November 1984,

## Description

The invention relates to a disc-record player comprising a device for scanning rotating disc-shaped information carriers, comprising a frame, a turntable, which is rotatable about an axis of rotation during operation and which comprises a supporting surface for information carriers having a circumferential edge, and a centring device for bringing said information carriers into a centred position relative to a centring axis, the centring device comprising a pair of resiliently and mutually movable pivotal arms which are each movable about a pivotal axis which extends parallel to the centring axis, which pivotal arms each comprising a centring element constructed to cooperate with the circumferential edges of said information carriers.

The centring device comprises a pair of further pivotal arms which are movable about a further pivotal axis extending parallel to the centring axis and which each comprise a further centring element constructed to cooperate with the circumferential edge of the information carrier, the centring elements and the further centring elements together being disposed at least substantially on a circle concentric with the centring axis in at least one position of the pivotal arms and the further pivotal arms relative to each other. Such a player is known from US-A-4523306.

A disc-record player comprising a centring device is also known from United States Patent Specification 2,508,715. The known disc-record player is suitable for playing phonograph records of two types having different diameters. For this purpose the player comprises a turntable, a pick-up arm, and a centring device for centring the phonograph records relative to the turntable. The centring device comprises two pivotal arms which are coupled to each other and a fixed and a pivotable stop. The pivotal arms each have a cylindrical centring element for cooperation with the circumferential edge of records of both types when the relevant record is slid into and out of the player. The fixed and the pivotable stop serve for limiting the loading movement of a large and a small record respectively, the pivotable stop being coupled to the pivotal arms via a mechanism. In the known centring device the two cylindrical centring elements in conjunction with the fixed stop and the pivotable stop respectively serve for approximately centring a phonograph record relative to the turntable. Exact centring of a record relative to the turntable is effected by means of an axially movable centring spindle, the dimensioning being such that in the operating position the record situated on the turntable is clear of the centring elements and the stops.

Using the prior-art device in modern disc-record players by means of which optical discs such as CDs can be inscribed and/or read would give rise to some problems. For example, owing to the presence of stops the prior-art centring device requires a disc-position detection which operates very accurately in order to ensure that a disc being loaded into the player is stopped duly to preclude a collision with one of the stops, which may damage the vulnerable optical disc. Another disadvantage of the prior-art centring device is the comparatively large space needed to bring the pivotable stop into its non-operational position, which makes it difficult to construct a disc-record player of small overall height. A further disadvantage is that the stops are situated at locations which in optical disc-record players are generally occupied by an optical scanning unit. Moreover, it is to be noted that in the known disc-record player the means proposed for disengaging the disc-record situated on the turntable from the centring elements and the stops are inadequate to obtain the desired and generally required clearance between an optical disc and the centring means.

It is an object of the invention to modify the disc-record player of the type defined in the opening paragraph in such a manner, by improving the centring device, that it is suitable as an optical disc-record player.

The disc-record player in accordance with the invention is characterized in that the centring device comprises a means for coupling one of the pivotal arms to one of the further pivotal arms to cause pivotal movement of the one of said further pivotal arms responsive to pivotal movement of the one of said pivotal arms, a means for coupling the other of the pivotal arms to the other of the further pivotal arms, to cause pivotal movement of the other of said further pivotal arms responsive to pivotal movement of the other of said pivotal arms and a means for movable coupling the one of the pivotal arms to the other of the pivotal arms to cause pivotal movement of the one of said pivotal arms responsive to pivotal movement of the other of said pivotal arms, both the pair of pivital arms and the pair of further pivotal arms being actuated by the information carrier during inserting.

Claim 6 contains a centring device for use in a disc record player according to the invention.

The disc-record player thus obtained is particularly suitable for inscribing and/or reading information tracks on optical or magneto-optical information carriers such as CDs and CD-singles. The disc-record player in accordance with the invention, which can have a small overall height, comprises a reliable centring device which can be assembled from a small number of parts and which enables said information carriers to be automatically centred with a high precision and without the risk of damage. A further advantage of the disc-record player in accordance with an embodiment of the invention is that after an information carrier to be scanned has been placed on the turntable the pivotal arms and the further pivotal arms can be pivoted away simply to bring them at an adequate distance from the information carrier to be scanned, which minimizes losses, in particular as result of friction, during the pivotal movement of the pivotal arms and the further pivotal arms. A movable coupling between the pivotal arms and between the pivotal arms and the further pivotal arms can be obtained by the use of mutually cooperating guide and follower means, such as for example in pin-and-slot connections, known per se. In principle, only one resilient element is required to establish a resilient coupling between the pivotal arms. Moreover, the centring device can be positioned in the disc-record player in such a way that no special steps are needed to mount the device for scanning the information carriers.

An embodiment of the disc-record player in accordance with the invention, which enables information carriers of different diameters to be centred without the use of additional parts, is characterized in that in at least one further position of the pivotal arms and the further pivotal arms relative to each other the centring elements and the further centring elements are together disposed at least substantially on a further circle concentric with the centring axis.

A practical and compact embodiment of the disc-record player in accordance with the invention is characterized in that the further pivotal axes are spaced from the pivotal axes. Since the further pivotal axes and the pivotal axes do not coincide only comparatively short pivotal arms and further pivotal arms are needed for centring information carriers of different diameters. The most favourable position of the pivotal axes and the further pivotal axes relative to the centring axis and the optimum position of the pivotal axes and the further pivotal axes relative to one another can be determined by experiment.

A simple embodiment, which is favourable in respect of production-engineering and in which the centring axis coincides with the axis of rotation of the turntable and the pivotal arms are supported in the frame, is characterized in that the further pivotal arms are also supported in the frame.

An embodiment which enables an information carrier to be moved accurately into and out of the disc-record player in a well-defined plane is characterized in that the centring elements and/or the further centring elements are constructed as pins or rollers each having a conical circumferential surface, the central axis extending parallel to the further pivotal axes.

It is to be noted that US Patent Specification 4,523,306 discloses a disc-record player comprising a helically rotatable disc support and four pairwise diametrally disposed levers having an arm for cooperation with a disc to be played. The disc support, which is arranged to be rotatable about a fixed axis of rotation, comprises two spindles disposed in a diametrically opposed fashion with respect to the centre line of the disc support, two of the said levers, which are pivotable independently of one another, being pivotable about each of the spindles. The arms each have an upright disc engaging projection or stud disposed in the plane of the disc. Arcuate guides are disposed on the disc support to engage one end of the arms as they are pivoted upon engagement with a disc. The arms are biassed towards the centre of the disc support by means of four springs, each spring being disposed between the disc support and a respective lever. The diametrically opposed positioning of the spindles and the interaction between the disc and the levers on the one hand and the levers and the guides on the other hand serve to centre the disc on the support as the support rotates from its load position to the play position.

It is to be noted that German Patent Specification 35 13 040 discloses a disc-record player comprising a transport device for moving optical discs of one specific diameter towards a turntable. The transport device comprises a pair of mutually coupled pivotal members and a pair of rectilinearly movable slide members coupled to the pivotal members. Said members each comprise a gripping element for cooperation with a disc edge. A release device ensures that the gripping elements release a disc situated near the turntable. The transport device of this prior-art optical disc player comprises a large number of parts and is intricate both as regards its construction and operation.

The invention will now be described in more detail, by way of example, with reference to the drawings in which
Figure 1 is an exploded view showing a disc-record player in accordance with the invention, comprising a centring device,
Figure 2 is a plan view showing the centring device with a CD-single in a centred position, and
Figure 3 is a plan view showing the centring device with a CD in a centred position.

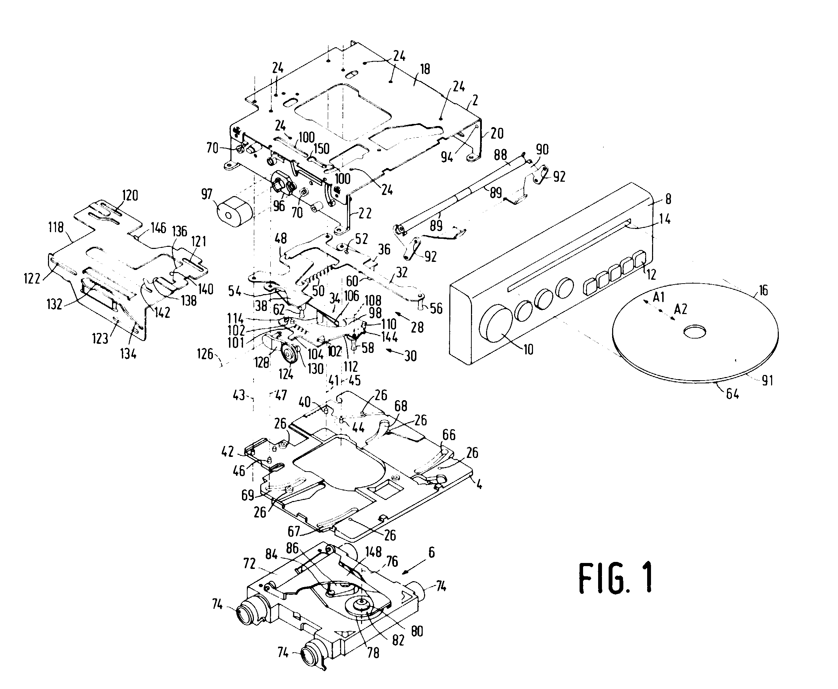

The disc-record player in accordance with the invention shown in Figure 1 is suitable for inscribing and/or reading optical information carriers such as CDs and CD-singles. The disc-record player comprises a metal housing 2, a flat plastics frame 4 secured in the housing 2, and an optical scanning device 6 secured in the housing 2. The housing 2 is arranged in a casing of which only a front wall 8 is shown. The front wall 8, which carries control knobs and keys 10 and 12, is formed with a slot 14 for moving an optical disc 16, for example a CD, into and out of the player in a loading direction Al and an unloading direction A2 respectively.

The housing 2 comprises a main wall 18 and two side walls 20 and 22. The main wall 18 is formed with six holes 24, which correspond to six holes 26 in the frame 4. The frame 4 is secured to the inner side of the main wall 18 of the housing 2 by means of bolts passed through the holes 24 and 26.

The disc-record player shown in Figure 1 further comprises a centring device 28 and, connected thereto, a detection unit 30 for detecting the position of the information carriers, hereinafter referred to as disc-position detection unit. The centring device 28 comprises a pair of pivotal arms 32 and 34, hereinafter referred to as first pivotal arms, and a pair of further pivotal arms 36 and 38, hereinafter referred to as second pivotal arms. The first pivotal arms 32 and 34 are supported on the frame 4 by means of journals 40 and 42 so as to be pivotable about pivotal axes 41 and 43 respectively, hereinafter referred to as first pivotal axes. The second pivotal arms 36 and 38 are supported on the frame 4 by means of journals 44 and 46 respectively so as to be pivotable about pivotal axes 45 and 47 respectively, hereinafter referred to as second pivotal axes. A tension spring 50 is arranged between the first pivotal arms 32 and 34, which are movably coupled to each other by means of a mechanical connection, in particular pin-slot linkage 48. The second pivotal arms 36 and 38 are movably coupled to the first pivotal arms 32 and 34 respectively by means of mutually cooperating members, in particular two pin-slot linkages 52 and 54. The first pivotal arms 32 and 34, which are made of a metal, comprise a centring element 56 and 58 respectively, hereinafter referred to as first centring elements, and the second pivotal arms 36 and 38, which are made of a plastics, comprise further centring elements 60 and 62, hereinafter referred to as second centring elements. The centring elements 56, 58, 60 and 62, which are adapted to cooperate with a circumferential edge 64 of an optical disc, may be constructed as cylindrical rollers or pins but preferably have a conical or double conical shape, the central axes of the centring elements 56, 58, 60 and 62 extending parallel to the pivotal axes 41, 43, 45 and 47. The frame 4 is formed with four slots 66, 67, 68 and 69 through which the centring elements 56, 58, 60 and 62 project to allow them to cooperate with the circumferential edge 64 of an optical disc.

The optical scanning device 6, which is of a type know per se, for example as disclosed in United States Patent Specification 4,403,316 is connected to the housing 2 by means of four pins passed through holes 70 in the side walls 20 and 22 of the housing 2 and a mounting plate 72 with four damping elements 74 and springs. The scanning device 6 comprises a turntable 78 which is rotatable about an axis of rotation 76 and which comprises a centring mandrel 80 and a supporting surface 82 for an optical disc.
The axis of rotation 76 extends parallel to the mutually parallel first and second pivotal axes 41, 43, 45 and 47. The scanning device 6 further comprises a scanning unit 84, which comprises an objective and which in the present example is secured to a pivotal arm 86.

An optical disc 16 inserted into the opening 14 in the front wall 8 is positioned between the centring elements 56, 58, 60 and 62 of the centring device 28 and above the turntable 78 of the scanning device 6 by means of an automatically operating loading device. In the present example the loading device comprises a disc drive roller 88, which is rotatably journalled in a pivotable roller holder 90. The roller holder 90 has two holes 92 which correspond to two holes 94 in the side walls 20 and 22 of the housing 2, the roller holder 90 being supported by means of two trunnions extending through the holes 92 and 94. The roller 88, which is known per se from European Patent Application 0,296,829, is driven by means of an electric motor 97 via a gear-wheel transmission, not shown, said motor being secured to a mounting portion 96 of the side wall 22 of the housing 2. During introduction of an optical disc 16 two slightly conical circumferential surfaces 89 of the roller 88 cooperate with a side face 91 of the optical disc, the optical disc then being situated between the roller 88 and the frame 4 and consecutively coming into contact with the first centring elements 56 and 58 and the second centring elements 60 and 62. The loading movement ceases once the optical disc has assumed the desired centred position.

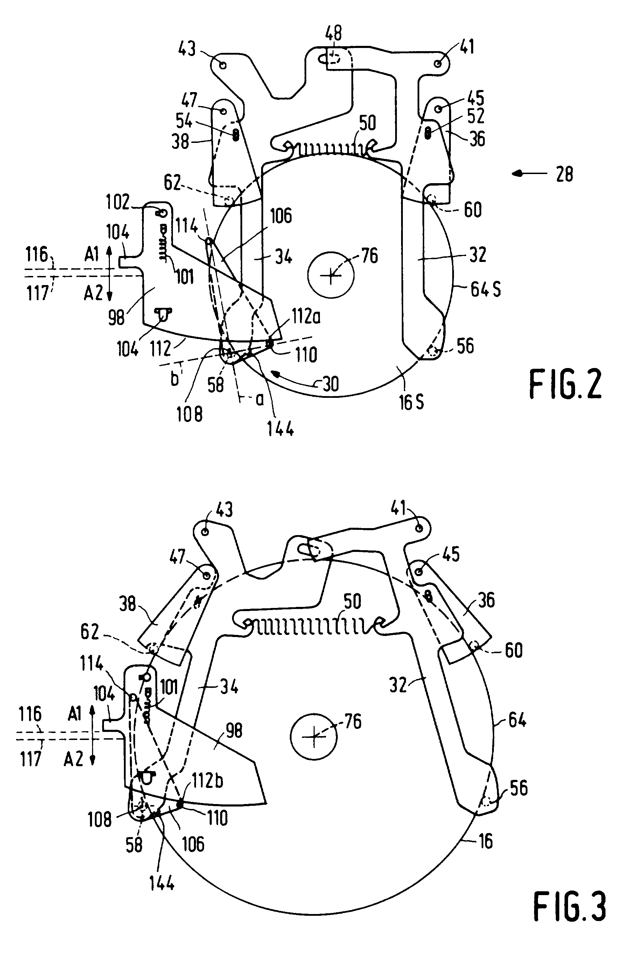

Figure 2 shows a situation in which a CD-single, referenced 16S, having a diameter of 8 cm is brought into a desired centred position by means of the centring device 28. In the disc-record player in accordance with the invention this centred position is dictated by the location of the turntable 78, so that the axis of rotation 76 of the turntable 78 is the centring axis. The disc 16S is then clamped between the first and the second centring elements 56, 58, 60 and 62. The centring elements 56, 58, 60 and 62, which engage against the circumferential edge 64S of the disc 16S, are situated on a circle whose centre is situated on the axis of rotation 76. The circle consequently corresponds to the circumferential edge 64S of the CD-single and has a diameter of 8 cm.

In the situation illustrated in Figure 3 a CD, bearing the reference numeral 16, is in the centred position, in which the central axis of the disc coincides with the axis of rotation 76 of the turntable. In this situation the first centring elements 56 and 58 and the second centring elements 60 and 62 are all situated on a circle whose centre is situated on the axis of rotation 76. This circle corresponds to the circumferential edge 64 of the CD and has a diameter of 12 cm. In the situation shown in Figure 3, the first pivotal arms 32 and 34 and the second pivotal arms 36 and 38, as is apparent from the drawings, have been pivoted apart through a specific angle about their respective pivotal axes 41, 43, 45 and 47 in comparison with the situation shown in Figure 2.

The disc-position detection unit 30 of the disc-record player in accordance with the invention shown in Figure 1 is intended for detecting the position, in particular the centred position, of an optical disc which has been loaded into the player and comprises a sliding member 98 which is movable in the loading direction A1 and in the opposite unloading direction A2. The sliding member 98 is supported to be slidable relative to the housing 2 by means of two trunnions 102 which engage slots 100 in the housing. A helical spring 101 is arranged between the sliding member 98, which is provided with a servo-element 104, and the housing 2. The detection unit 30 further comprises a rotary member 106 which is rotatable about an axis of rotation 108 and which is supported on the pivotal arm 34. The axis of rotation 108 coincides with the central axis of the centring element 58 and extends parallel to the pivotal axis 43 of the pivotal arm 34. The rotary member 106 comprises a guide element 110 in the form of a projection or pin for cooperation with a guiding edge 112 of the sliding member 98. The guide edge 112 has at least two portions 112a and 112b (see Figures 2 and 3 respectively) which are situated approximately on a circle whose centre is situated on or near the pivotal axis 43. The rotary member 106 carries a pin-shaped detection element 114 adapted to cooperate with the circumferential edge 64 or 64S of an optical disc 16 or 16S which has been loaded into the disc-record player. The rotary member has such a shape that the straight line a through the axis of rotation 108 and the detection element 114 extends at an angle of substantially 90° relative to the straight line b through the axis of rotation 108 and the guide element 110 (see Figure 2).

The operation of the detection unit 30 will be described in detail with reference to Figures 2 and 3. As already mentioned, Figure 2 illustrates the situation in which a CD-single 16S is in the centred position which is related to the position of the turntable 78 and in which the central axis of the disc 16S coincides with the axis of rotation 76 of the turntable 78. The rotary member 106 of the detection unit 30 occupies such a position that the detection element 114 engages against the circumferential edge 64S of the disc. When the disc 16S is moved to the centred position the sliding member is moved against the action of the spring 101 in a direction parallel to the loading direction Al as a result of the cooperation between the guide element 110 and the guiding edge 112, in particular the portion 112a of this edge. The above construction of the detection unit 30 ensures that the servo element 104 passes a pre-defined marking line 116 on the frame 4 exactly at the instant at which an inserted optical disc reaches the centred position. If there is no disc in the disc-record player the servo element 104 is situated at the location of the broken line 117.

As stated hereinbefore, Fig. 3 illustrates the situation in which a Compact Disc 16 is in the desired centred position. Since the diameter of the disc 16 is larger than that of the disc 16S the first pivotal arms 32 and 34 and the second pivotal arms 36 and 38 are spread further apart than in the situation illustrated in Fig. 2. As a result of the movement of the pivotal arm 34 the axis of rotation 108 of the rotary member 106 is displaced sideways and as a result of the larger disc diameter the detection element 114 is also moved sideways. As a result of these movements the guide element 110 has moved to the area 112b of the guiding edge 112, the sliding member 98 being moved in the direction A1. In the position shown, in which the disc 16 is exactly in the centred position, the servo element 104 is again situated on the marking line 116.

The disc-record player shown in Fig. 1 comprises a command element 118 which is supported on the housing 2 so as to be movable in the directions A1 and A2. For this purpose the command element 118 has four guide slots 120, 121, 122 and 123 engaged by guide pins on the main wall 18 and the side wall 22 of the housing 2. The command element 118 is driven by the electric motor 97 via a gear wheel transmission. The gear wheel transmission comprises a gear wheel 124. The gear wheel 124 is arranged on a tilting arm 128 which is movable about a pivotal axis 126 and which is supported in the side wall 22 of the housing 2. The tilting arm 128 has a surface 130 for cooperation with the servo element 104 of the detection unit 30. During loading of an optical disc the tilting arm 128 is pressed against the servo element 104 at the location of the surface 130 under the influence of friction or spring force. However, when an optical disc reaches the centred position the servo element clears the surface 130 as a result of the movement of the sliding member 98 in the direction Al and the tilting arm is tilted until the gear wheel 124 meshes with a gear rack 132 of the command element 118, so that a mechanical coupling is established between the motor 97 and the command element 118. After said tilting of the tilting arm 128 the drive of the disc drive roller 88 is stopped via a mechanism which is shown only partly.

The command element 118 has an inclined slot 134 which is engaged by a spindle, not shown, of a mechanism which is coupled to the roller holder 90. The command element 118 further comprises two peripheral portions 136 and 138 for cooperation with the guide element 110, the guide element 110 being situated at the location of the peripheral portion 136 in the centred position of a CD-single and the guide element 110 being situated at the location of the peripheral portion 138 in the centred position of a CD. The command element 118 further comprises two inclined edges 140 and 142 for cooperation with a projection 144 of the rotary member 106, the projection 144 being situated at the location of the inclined edge 140 in the centred position of a CD-single and the projection 144 being situated at the location of the inclined edge 142 in the centred position of a CD. A lateral edge of the command element 118 further carries an actuating projection 146 for cooperation with a disc-pressure member 148. If after centring of an optical disc 16 or 16S the command element 118 is coupled to the drive motor 97 by tilting of the tilting arm 128 the first centring elements 56 and 58, the second centring elements 60 and 62, the detection element 114 and the roller 88 are moved to a desired distance from the disc during the movement of the command element in the direction Al and the disc-pressure member 148 presses the disc against the supporting surface 82 of the turntable 78.

In order the remove an optical disc from the turntable and move it outwards the command element is moved in the direction indicated by the arrow A2 by means of the motor 97, the spring 50 arranged between the first pivotal arms 32 and 34 and the spring 101 arranged between the sliding member 98 and an edge portion 150 of the housing 2 ensuring that all the centring elements 56, 58, 60 and 62 and the detection element 114 are moved towards the disc circumference. The spring 50 then provides enough spring force to move the disc which lies on the turntable so far along the axis of rotation 76 of the turntable 78 by means of the double conical centring elements 56, 58, 60 and 62 that the disc can be moved outwards over the centring cone 80 when the roller is driven in the appropriate direction. If desired, the last-mentioned function of the centring elements may be performed by the roller 88.

It will be appreciated that the invention is not limited to the embodiment shown in the drawings. For example, disc-record players constructed to scan more than two discs of different diameters and disc-record players constructed to inscribe and/or read two discs of diameters other than those mentioned in the example also fall within the scope of the invention.

## Claims

1. A disc-record player comprising a device for scanning rotating disc-shaped information carriers, comprising a frame (4), a turntable (78), which is rotatable about an axis of rotation (76) during operation and which comprises a supporting surface (82) for an information carrier having a circumferential edge, and a centring device (28) for bringing the information carrier into a centred position relative to a centring axis (76), the centring device comprising a pair of resiliently and mutually movable pivotal arms (32, 34) which are each movable about a pivotal axis (41, 43) which extends parallel to the centring axis, which pivotal arms each comprise a centring element (56, 58) constructed to cooperate with the circumferential edge of the information carrier, the centring device comprising
- a pair of further pivotal arms (36, 38) which are movable about a further pivotal axis (45, 47) extending parallel to the centring axis (76) and which each comprise a further centring element (60, 62) constructed to cooperate with the circumferential edge of the information carrier, the centring elements (56, 58) and the further centring elements together being disposed at least substantially on a circle concentric with the centring axis in at least one position of the pivotal arms (32, 34) and the further pivotal arms relative to each other, characterized in that the centring device comprises
- a means (52) for coupling one (32) of the pivotal arms to one (36) of the further pivotal arms to cause pivotal movement of the one of said further pivotal arms responsive to pivotal movement of the one of said pivotal arms,
- a means (54) for coupling the other (34) of the pivotal arms to the other (38) of the further pivotal arms, to cause pivotal movement of the other of said further pivotal arms responsive to pivotal movement of the other of said pivotal arms and
- a means (48, 50) for movable coupling the one (32) of the pivotal arms to the other (34) of the pivotal arms to cause pivotal movement of the one of said pivotal arms responsive to pivotal movement of the other of said pivotal arms,
both the pair of pivotal arms and the pair of further pivotal arms being actuated by the information carrier during inserting.

2. A disc-record player as claimed in Claim 1, in which the centring device is constructed to centre information carriers of mutually different diameters, characterized in that in at least one further position of the pivotal arms (32, 34) and the further pivotal arms (36, 38) relative to each other the centring elements (56, 58) and the further centring element (60, 62) are together disposed at least substantially on a further circle concentric with the centring axis (76).

3. A disc-record player as claimed in Claim 1 or 2, characterized in that the further pivotal axes (45, 47) are spaced from the pivotal axes (41, 43).

4. A disc-record player as claimed in Claim 1, 2 or 3, in which the centring axis (76) coincides with the axis of rotation (76) of the turntable (78) and the pivotal arms (32, 34) are supported in the frame (4), characterized in that the further pivotal arms (36, 38) are also supported in the frame.

5. A disc-record player as claimed in Claim 1, 2, 3 or 4, characterized in that the centring elements (56, 58) and/or the further centring elements (60, 62) are constructed as pins or rollers each having a conical circumferential surface, the central axis extending parallel to the further pivotal axes (45, 47).

6. A centring device for use in a disc-record player as claimed in Claim 1, 2, 3, 4 or 5, the centring device (28) comprising a pair of resiliently and mutually movable pivotal arms (32, 34) which are each movable about a pivotal axis (41, 43) which extends parallel to a centring axis (76), which pivotal arms each comprise a centring element (56, 58) constructed to cooperate with the circumferential edge of an information carrier, the centring device comprising
- a pair of further pivotal arms (36, 38) which are movable about a further pivotal axis (45, 47) extending parallel to the centring axis (76) and which each comprise a further centring element (60, 62) constructed to cooperate with the circumferential edge of the information carrier, the centring elements (56, 58) and the further centring elements together being disposed at least substantially on a circle concentric with the centring axis in at least one position of the pivotal arms (32, 34) and the further pivotal arms relative to each other,
- a means (52) for coupling one (32) of the pivotal arms to one (36) of the further pivotal arms to cause pivotal movement of the one of said further pivotal arms responsive to pivotal movement of the one of said pivotal arms,
- a means (54) for coupling the other (34) of the pivotal arms to the other (38) of the further pivotal arms, to cause pivotal movement of the other of said further pivotal arms responsive to pivotal movement of the other of said pivotal arms and
- a means (48, 50) for movable coupling the one (32) of the pivotal arms to the other (34) of the pivotal arms to cause pivotal movement of the one of said pivotal arms responsive to pivotal movement of the other of said pivotal arms, actuation of both the pair of arms being by the information carrier.

## Patentansprüche

1. Plattenspieler mit einer Vorrichtung zum Abtasten sich drehender scheibenförmiger Informationsträger mit einem Gestell (4), einem im Betrieb um eine Drehungsachse (76) drehbaren Plattenteller (78) mit einer Auflegefläche (82) für Informationsträger mit einem Umfangsrand, und einer Zentriervorrichtung (28) um die genannten Informationsträger in eine gegenüber einer Zentrierachse (76) zentrierte Lage zu bringen, wobei diese Zentriervorrichtung mit einem Paar federnden und gegenüber einander beweglich gekuppelten Schwenkarmen (32,34) versehen ist, die je um eine sich parallel zu der Zentrierachse erstreckende Schwenkachse verlagerbar sind und wobei diese Schwenkarme je ein Zentrierelement (56, 58) aufweisen, das dazu vorgesehen ist, mit dem Umfangsrand der genannten Informationsträger zusammenzuarbeiten, wobei die Zentriervorrichtung die nachfolgenden Elemente aufweist:
- ein Paar weiterer Schwenkarme (36, 38), die um eine weitere Schwenkachse (45, 47) beweglich sind, die sich parallel zu der Zentrierachse (76) erstrecken und die je ein weiteres Zentrierelement (60, 62) aufweisen, das zum Zusammenarbeiten mit dem Umfangsrand des Informationsträgers vorgesehen ist, wobei die Zentrierelemente (56, 58) und die weiteren Zentrierelemente zusammen wenigstens im wesentlichen auf einem zu der Zentrierachse konzentrischen Kreis in wenigstens einer Lage der Schwenkarme (32, 34) und der weiteren Schwenkarme gegenüber einander vorgesehen sind, dadurch gekennzeichnet, daß die Zentriervorrichtung die nachfolgenden Elemente aufweist:
- ein Mittel (52) zum Kuppeln eines (32) der Schwenkarme mit einem (36) der weiteren Schwenkarme zum Herbeiführen einer Schwenkbewegung des einen der genannten weiteren Schwenkarme in Antwort auf die Schwenkbewegung des einen der genannten Schwenkarme,
- ein Mittel (54) zum Kuppeln des anderen Schwenkarms (34) mit dem anderen (38) der weiteren Schwenkarme zum Herbeiführen einer Schwenkbewegung des anderen der genannten weiteren Schwenkarme in Antwort auf die Schwenkbewegung des anderen Schwenkarms und
- ein Mittel (48, 50) zur beweglichen Kupplung des einen Schwenkarms (32) der Schwenkarme mit dem anderen (34) der Schwenkarme zum Herbeiführen einer Schwenkbewegung des einen der genannten Schwenkarme in Antwort auf eine Schwenkbewegung des anderen der genannten Schwenkarme,
wobei das Paar Schwenkarme sowie das Paar weiterer Schwenkarme durch den Informationsträger beim Einführen desselben betätigt werden.

2. Plattenspieler nach Anspruch 1, wobei die Zentriervorrichtung dazu vorgesehen ist, Informationsträger unterschiedlicher Durchmesser zu zentrieren, dadurch gekennzeichnet, daß in wenigstens einer weiteren Lage der Schwenkarme (32, 34) und der weiteren Schwenkarme (36, 38) untereinander die Zentrierelemente (56, 58) und die weiteren Zentrierelemente (60, 62) sich gemeinsam wenigstens nahezu auf einem weiteren sich gegenüber der Zentrierachse (76) konzentrisch erstreckenden Kreis befinden.

3. Plattenspieler nach Anspruch 1 oder 2, dadurch gekennzeichnet, daß die weiteren Schwenkachsen (45, 47) sich in einem Abstand von den Schwenkachsen (42, 43) befinden.

4. Plattenspieler nach Anspruch 1, 2 oder 3, wobei die Zentrierachse (76) mit der Drehungsachse (76) des Plattentellers (78) zusammenfällt und die Schwenkarme (32, 34) in dem Gestell (4) gelagert sind, dadurch gekennzeichnet, daß die weiteren Schwenkarme (36, 38) ebenfalls in dem Gestell gelagert sind.

5. Plattenspieler nach Anspruch 1, 2, 3 oder 4, dadurch gekennzeichnet, daß die Zentrierelemente (56, 58) und/oder die weiteren Zentrierelemente (60, 62) als Stifte oder Rollen mit je einer kegelförmigen Mantelfläche ausgebildet sind, wobei die Mittellinie sich parallel zu den weiteren Schwenkachsen (45, 47) erstreckt.

6. Zentriervorrichtung zum Gebrauch bei einem Plattenspieler nach Anspruch 1, 2, 3, 4 oder 5, wobei diese Zentriervorrichtung (28) mit einem Paar federnden und gegenüber einander beweglich gekuppelten Schwenkarmen (23, 34) versehen ist, die je um eine sich parallel zu der Zentrierachse (76) erstreckende Schwenkachse (41, 43) verlagerbar sind und wobei diese Schwenkarme je ein Zentrierelement (56, 58) aufweisen, das dazu vorgesehen ist, mit dem Umfangsrand eines Informationsträgers zusammenzuarbeiten, wobei diese Zentriervorrichtung die nachfolgenden Elemente aufweist:
- ein Paar weiterer Schwenkarme (36, 38), die um eine weitere Schwenkachse (45, 47) beweglich sind, die sich parallel zu der Zentrierachse (76) erstrecken und die je ein weiteres Zentrierelement (60, 62) aufweisen, das zum Zusammenarbeiten mit dem Umfangsrand des Informationsträgers vorgesehen ist, wobei die Zentrierelemente (56, 58) und die weiteren Zentrierelemente zusammen wenigstens im wesentlichen auf einem zu der Zentrierachse konzentrischen Kreis in wenigstens einer Lage der Schwenkarme (32, 34) und der weiteren Schwenkarme gegenüber einander vorgesehen sind,
- ein Mittel (52) zum Kuppeln eines (32) der Schwenkarme mit einem (36) der weiteren Schwenkarme zum Herbeiführen einer Schwenkbewegung des einen der genannten weiteren Schwenkarme in Antwort auf die Schwenkbewegung des einen der genannten Schwenkarme,
- ein Mittel (54) zum Kuppeln des anderen Schwenkarms (34) der Schwenkarme mit dem anderen (38) der weiteren Schwenkarme zum Herbeiführen einer Schwenkbewegung des anderen der genannten weiteren Schwenkarme in Antwort auf die Schwenkbewegung des anderen Schwenkarms und
- ein Mittel (48, 50) zur beweglichen Kupplung des einen Schwenkarms (32) mit dem anderen (34) der Schwenkarme zum Herbeiführen einer Schwenkbewegung des einen der genannten Schwenkarme in Antwort auf eine Schwenkbewegung des anderen der genannten Schwenkarme, wobei das Paar Schwenkarme sowie das Paar weiterer Schwenkarme durch den Informationsträger betätigt werden.

## Revendications

1. Tourne-disque muni d'un dispositif pour le balayage de supports d'information en forme de disque rotatif, comprenant un châssis (4), une plaque rotative (78), qui peut tourner autour d'un axe de rotation (76) pendant le fonctionnement et qui est muni d'une surface de support (82) pour un support d'information présentant un bord circonférentiel, et un dispositif de centrage (28) pour porter le support d'information dans une position centrée par rapport à l'axe de centrage (76), le dispositif de centrage étant muni d'une paire de bras de pivotement élastiquement et mutuellement mobiles (32, 34) qui sont chacun mobiles autour d'un axe de pivotement (41, 43), qui s'étend parallèlement à l'axe de centrage, lesquels bras de pivotement sont munis chacun d'un élément de centrage (56, 58) réalisé pour coopérer avec le bord circonférentiel du support d'information, le dispositif de centrage comprenant
- une paire d'autres bras de pivotement (36, 38) qui sont mobiles autour d'un autre axe de pivotement (45, 47) s'étendant parallèlement à l'axe de centrage (76) et qui sont munis chacun d'un autre élément de centrage (60, 62) réalisé pour coopérer avec le bord circonférentiel du support d'information, les éléments de centrage (56, 58) et les autres éléments de centrage sont disposés ensemble au moins pratiquement sur un cercle concentrique avec l'axe de centrage dans au moins une position des bras de pivotement (32, 34) et les autres bras de pivotement les uns par rapport aux autres, caractérisé en ce que le dispositif de centrage comprend
- un moyen (52) pour accoupler l'un (32) des bras de pivotement à l'un (36) des autres bras de pivotement pour provoquer un mouvement de pivotement de l'un desdits autres bras de pivotement sensibles au mouvement de pivotement de l'un desdits bras de pivotement,
- un moyen (54) pour accoupler l'autre (34) des bras de pivotement à l'autre (38) des autres bras de pivotement pour provoquer un mouvement de pivotement de l'autre desdits autres bras de pivotement sensibles au mouvement de pivotement de l'autre desdits bras de pivotement et
- un moyen (48, 50) pour accoupler de façon mobile l'un (32) des bras de pivotement à l'autre (34) des bras de pivotement pour provoquer un mouvement de pivotement de l'un desdits bras de pivotement sensibles au mouvement de pivotement de l'autre desdits bras de pivotement, la paire de bras de pivotement et la paire d'autres bras de pivotement étant actionnées par le support d'information pendant l'insertion.

2. Tourne-disque selon la revendication 1, dans lequel le dispositif de centrage est conçu pour centrer les supports d'information de diamètres mutuellement différents, caractérisé en ce que dans au moins une autre position des bras de pivotement (32, 34) et des autres bras de pivotement (36, 38) les uns par rapport aux autres, les moyens de centrage (56, 58) et les autres moyens de centrage (60, 62) sont disposés ensemble au moins pratiquement sur un autre cercle concentrique par rapport à l'axe de centrage (76).

3. Tourne-disque selon la revendication 1 ou 2, caractérisé en ce que les autres bras de pivotement (45, 47) sont espacés des axes de pivotement (41, 43).

4. Tourne-disque selon la revendication 1, 2 ou 3, dans lequel l'axe de centrage (76) coïncide avec l'axe de rotation (76) de la plaque rotative (78) et les bras de pivotement (32, 24) sont supportés dans le châssis (4), caractérisé en ce que les autres bras de pivotement (36, 38) sont également supportés dans le châssis.

5. Tourne-disque selon la revendication 1, 2, 3 ou 4, caractérisé en ce que les éléments de centrage (56, 58) et/ou les autres éléments de centrage (60, 62) sont conçus comme des broches ou des rouleaux présentant chacun une surface circonférentielle conique, l'axe central s'étendant parallèlement aux autres axes de pivotement (45, 47).

6. Dispositif de centrage à utiliser dans un tourne-disque selon la revendication 1,2, 3, 4 ou 5, le dispositif de centrage (28) comprenant une paire de bras de pivotement élastiquement et mutuellement mobiles (32, 34) qui sont mobiles chacun par rapport à un axe de pivotement (41, 43) qui s'étend parallèlement à un axe de centrage (76), lesquels bras de pivotement sont munis chacun d'un élément de centrage (56, 58) conçu pour coopérer avec le bord circonférentiel d'un support d'information, le dispositif de centrage comprenant
- une paire d'autres bras de pivotement (36, 38) qui sont mobiles par rapport à un autre axe de pivotement (45, 47) s'étendant parallèlement à l'axe de centrage (76) et qui sont munis chacun d'un autre élément de centrage (60, 62) conçu pour coopérer avec le bord circonférentiel du support d'information, les éléments de centrage (56, 58) et les autres éléments de centrage étant disposés ensemble au moins pratiquement sur un cercle concentrique par rapport à l'axe de centrage dans au moins une position des bras de pivotement (32, 34) et les autres bras de pivotement les uns par rapport aux autres,
- un moyen (52) pour accoupler l'un (32) des bras de pivotement à l'un (36) des autres bras de pivotement pour provoquer un mouvement de pivotement de l'un des autres bras de pivotement sensibles au mouvement de pivotement de l'un desdits bras de pivotement,
- un moyen (54) pour accoupler l'autre (34) des bras de pivotement à l'autre (38) des autres bras de pivotement pour provoquer un mouvement de pivotement de l'autre desdits bras de pivotement sensible au mouvement de pivotement de l'autre desdits bras de pivotement et
- un moyen (48, 50) pour accoupler de façon mobile l'un (32) des bras de pivotement à l'autre (34) des bras de pivotement pour provoquer un mouvement de pivotement de l'un desdits bras de pivotement sensible au mouvement de pivotement de l'autre desdits bras de pivotement, les deux paires de bras étant actionnées par le support d'information.
